# EUROPÄISCHE PATENTSCHRIFT

(11) **EP 1 414 678 B1**
(45) Veröffentlichungstag und Bekanntmachung des Hinweises auf die Patenterteilung: **23.08.2006**
(21) Anmeldenummer: 02754433.7
(22) Anmeldetag: 25.07.2002
(51) Int. Cl.: B60R 21/34, B62D 25/12

(54) **KAROSSERIE MIT EINER NACHGIEBIG GELAGERTEN FRONTHAUBE**
BODYWORK COMPRISING A FRONT BONNET THAT IS ELASTICALLY MOUNTED
CARROSSERIE COMPRENANT UN CAPOT AVANT MONTE DE MANIERE ELASTIQUE

(30) Priorität: 28.07.2001 DE 10136901
(43) Veröffentlichungstag der Anmeldung: 06.05.2004
(73) Patentinhaber: ADAM OPEL AG, 65423 Rüsselsheim (DE)
(72) Erfinder: RENNEISEN, Ingo, 65239 Hochheim (DE)
(86) Internationale Anmeldenummer: PCT/DE2002/002729
(87) Internationale Veröffentlichungsnummer: WO 2003/011659

(56) Entgegenhaltungen:
- EP-A- 1 104 728
- DE-A- 19 948 459
- DE-C- 19 922 107
- US-A- 5 697 467

## Beschreibung

Die Erfindung betrifft eine Karosserie mit einer nachgiebig gelagerten Fronthaube, die den Bereich zwischen zwei Kotflügeln der Karosserie überspannt und zu beiden Seiten mit jeweils einem Scharnier mit der Karosserie verbunden ist, so dass die Fronthaube um eine von den Scharnieren definierte Schwenkachse aufklappbar ist, wobei jedes Scharnier einen Scharnierdrehpunkt am freien Ende eines mit der Karosserie verbundenen Auslegers aufweist, der bei einer stoßartigen Belastung seine Lage ändert, so dass der Scharnierdrehpunkt einen Versatz gegenüber der Karosserie erfährt. Eine solche Karosserie ist Gegenstand der DE 199 22 107 C1

Aus dem Dokument DE 19948459 A1 ist eine Karosserie nach dem Oberbegriff des Anspruchs 1 bekannt.

Mit einer nachgiebig gelagerten Fronthaube soll erreicht werden, dass die Verletzungen eines von der Front eines Fahrzeuges erfassten Fußgängers möglichst gering bleiben. Bei einem solchen Unfall wird sein Körper auf die Fronthaube abgewickelt, wobei der Kopf dort aufschlägt und stark verzögert wird. Die vom menschlichen Kopf in einem bestimmten Zeitintervall ertragbaren Verzögerungen, bei denen noch keine schweren Verletzungen auftreten, sind bekannt. Zur Bewertung eines Verzögerungsverlaufes in dieser Hinsicht wird der HIC-Wert herangezogen, dessen Definition der Fachliteratur entnommen werden kann. Die Fahrzeughersteller bemühen sich auf Grund gesetzlicher Vorgaben, diesen Wert für einen Kopfaufprall unter 1000 zu halten.

Für nicht unterstützte Bereiche der Fronthaube, z. B. im mittleren Bereich, ist dies durch geeignete Polsterungen unterhalb der äußeren Schale der Fronthaube relativ leicht zu erreichen: Problematisch ist allerdings der Bereich der Scharniere, da hier eine direkte, im allgemeinen nicht nachgiebige Anbindung an die Karosserie besteht. Um hier Abhilfe zu schaffen, kippt bei der in der DE 199 22 107 C1 beschriebenen Karosserie der Ausleger bei einem Kopfaufprall gegen einen erheblichen Widerstand nach hinten parallel zur Fahrzeuglängsachse und erfährt dabei gegenüber seiner Ursprungssituation einen Versatz parallel zur Fahrzeuglängsachse, wobei durch den konstruktiv eingestellten Widerstand die Kopfverzögerung bestimmt ist.

Nicht genügen kann diese Anordnung bei einer eingelegten Fronthaube, die bündig in einen benachbarten Kotflügel übergeht. Wenn der Kopf im Übergangsbereich von der Fronthaube zum Kotflügel aufschlägt, entsteht die folgende Situation: Die Fronthaube gibt zwar nach, der Kopf kontaktiert aber die Kante des Kotflügels, was zu besonders schweren Verletzungen führen kann, da nun die Krafteinwirkung auf den Kopf nicht mehr flächig, sondern linienförmig erfolgt. Zwar ist es bekannt, auch den Kotflügel nachgiebig zu lagern. Es kann aber nicht sichergestellt werden, dass sowohl der Kotflügel als auch die Fronthaube unabhängig vom genauen Aufschlagsort stets im gleichen Maße nachgeben, so dass keine Stufe zwischen der Fronthaube und dem Kotflügel entsteht.

Ähnliche Probleme treten auch bei sogenannten übergreifenden Fronthauben auf. Diese haben zwar keinen bündigen Übergang zum Kotflügel im Bereich eines möglichen Kopfaufschlages, gehen aber in der Regel mit ihrer hinteren Kante bündig in einen den Wasserkasten abdeckenden bzw. ein die A-Säule des Fahrzeuges bildenden Karosserieabschnitt über.

Die Erfindung beruht damit auf dem Problem, die Fronthaube derartig nachgiebig zu lagern, dass auch bei einem Kopfaufschlag im Übergangsbereich zum benachbarten Karosserieabschnitt die zu erwartenden Kopfverletzungen, beschrieben durch einen HIC-Wert, möglichst gering bleiben.

Dies wird bei einer Karosserie gemäß dem Oberbegriff des Anspruchs 1 dadurch erreicht, dass der Versatz eine Komponente von einem Karosserieabschnitt weg aufweist, in den die Fronthaube nahe dem Scharnier bündig übergeht.

Dies hat zur Folge, das die Fronthaube nicht nur nachgibt, sondern ihr Rand vom benachbarten Karosserieabschnitt wegwandert und dabei den Kopf von der Kante des Karosserieabschnittes entfernt, so dass eine Kontaktierung des Karosserieabschnittes durch den Kopf vermieden wird.

Wenn von einer Komponente des Versatzes in eine bestimmte Richtung gesprochen wird, so bedeutet dies, dass der Versatz zusätzlich noch andere Komponente aufweisen kann, z. B. zusätzlich noch eine nach unten gerichtete vertikale Komponente, wobei in dieser vorzugsweise der Hauptteil der Bewegungsenergie des Kopfes aufgenommen wird.

Besonders vorteilhaft ist es, wenn die Achse des Scharnierdrehpunktes auf Grund des Versatzes eine zusätzliche Kippung in einer Ebene senkrecht zur Kante des benachbarten Karosserieabschnittes erfährt. Dabei wird nämlich die Fronthaube in diesem Bereich ebenfalls gekippt. Durch die sich dabei bildende Schräge wird der Kopf noch stärker von der Kante des jeweiligen Karosserieabschnittes ferngehalten, was die Verletzungswahrscheinlichkeit noch weiter reduziert.

Grundsätzlich muss der Ausleger selbst und seine Verbindung zur Karosserie gegenüber normalen statischen Belastungen stabil sein, so dass der Versatz erst oberhalb einer bestimmten Belastung eintritt. Dies hat, was weiter unten näher erläutert werden soll, auch günstige Auswirkungen auf den aus einem Kopfaufprall resultierenden HIC-Wert.

Einen sowohl vertikalen als auch seitlichen Versatz erhält man in konstruktiv einfacher Weise, wenn der Ausleger unterhalb des Scharnierdrehpunktes in einen Auslegerdrehpunkt drehbar an der Karosserie gelagert und die Achse des Auslegerdrehpunktes in etwa parallel zur Kante des Karosserieabschnittes ausgerichtet ist. Beim Überschreiten der Belastung kippt der Ausleger bezogen auf seinen Lagerpunkt nach unten und von dem angrenzenden Karosserieabschnitt weg, wobei der Scharnierdrehpunkt auf einer Kreisbahn bewegt wird.

In vielen Versuchen hat sich gezeigt, dass eine zweistufige Belastung des Kopfes den HIC-Wert klein hält. Eine erste Stufe schließt sich unmittelbar an den Aufschlag des Kopfes auf die Fronthaube an. Die Steifigkeit der Fronthaube selbst sowie die ihrer Lagerung an der Karosserie bewirkt zunächst eine relativ hohe Verzögerung, deren Auswirkung auf den HIC-Wert aber klein gehalten werden kann, wenn dafür gesorgt wird, dass sie nur kurzzeitig wirkt und vor einer nächsten Krafteinwirkung eine Art Ruhepause eintritt. Dies kann im vorliegenden Fall dadurch erreicht werden, wenn der Ausleger mittels einer bei einer Grenzbelastung brechenden oder leicht nachgebenden Verbindung an der Karosserie gehalten ist. Solange die Grenzbelastung noch nicht erreicht ist, findet die erste Stufe der Kopfverzögerung statt: Der Kopf wird kurzzeitig stark verzögert und verliert einen Teil seiner Bewegungsenergie. Beim Erreichen der Grenzbelastung bricht die Halterung des Auslegers ab, so dass der Scharnierdrehpunkt nur noch die oben beschriebene Kreisbewegung ausführt. Die in dieser Ruhephase wirkende Kopfverzögerung ist gering. In einer zweiten Stufe kommt es zu einem Kontakt mit unterhalb der Fronthaube vorhandenen Aggregaten oder Karosserieteilen. Hierbei erfolgt der Stoß aber ausgehend von einer schon verringerten Geschwindigkeit, so dass auch hier die zu erwartenden Verletzungen nicht erheblich sind.

Zur Realisierung der Grenzbelastung ist vorgesehen, dass der Ausleger und die Karosserie je eine Backe aufweist, die flächig aneinander liegen und von einem Scherbolzen durchdrungen sind. Die Schergrenzbelastung des Scherbolzens bestimmt dabei die Grenzbelastung, bei deren Überschreitung die erste Phase der Verzögerung beendet ist.

Bei einer eingelegten Fronthaube, wird der Karosserieabschnitt von dem jeweils benachbarten, sich in Längsrichtung des Fahrzeuges erstreckenden Kotflügel gebildet. Demgemäss weist der Auslegerdrehpunkt eine zur Fahrzeuglängsachse parallele Achse auf. Vorzugsweise ist dabei der Auslegerdrehpunkt an einem Lagerbock unterhalb eines Kotflügels angeordnet. Dies hat den Vorteil, dass die Lagerung des Auslegers verdeckt unter dem Kotflügel liegt und damit als Hindernis in der zweiten Stufe der Verzögerung nicht in Frage kommt.

Bei den sogenannten übergreifenden Kotflügeln liegt die kritische Stelle im Bereich der hinteren Kante der Fronthaube im Übergang zu Karosserieabschnitten, die den Wasserkasten oder Teile der A-Säule bilden. In diesem Fall erstreckt sich die Achse des Auslegerdrehpunktes quer zur Fahrzeuglängsrichtung, so dass der Ausleger nach Überschreiten der Grenzbelastung nach vorne kippt, so dass sich die hintere Kante von dem Wasserkasten bzw. der A-Säule entfernt.

Zur weiteren Erläuterung der Erfindung sollen im Folgenden zwei Ausführungsbeispiele näher erläutert werden. Dazu zeigen:
- Fig. 1: eine perspektivische Darstellung einer ersten Ausführung des Scharniers an einem Ausleger in einer Ursprungslage,
- Fig. 2: dasselbe Scharnier nach einem Kopfaufprall,
- Fig. 3: eine Frontalansicht des Scharniers nach Fig. 1 und 2 mit einem angedeuteten Kotflügel und einer angedeuteten Fronthaube, um die Wirkungsweise des Scharniers beschreiben zu können,
- Fig.4: eine weitere Ausführung des Scharniers.

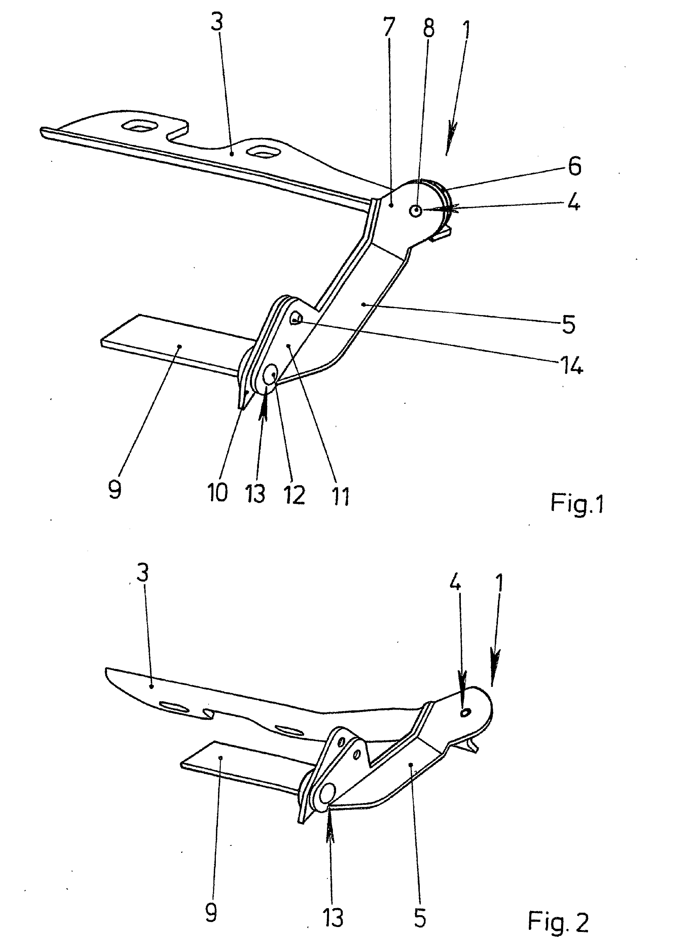

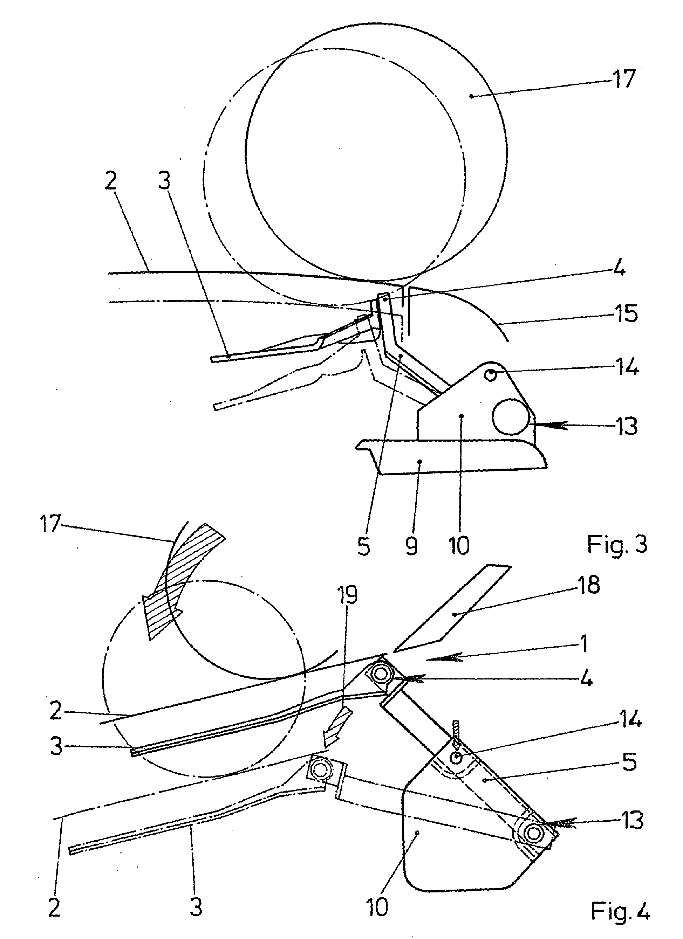

Zunächst wird auf die Figuren 1 und 2 Bezug genommen. Diese zeigen ein Scharnier 1 für eine Fronthaube 2 (gezeigt in Fig.3): Eine Haubenbefestigungsschiene 3 in Form eines Flacheisens, das flächig mit der Fronthaube 2 verschweißt oder in sonstiger Weise verbunden ist, ist über einen als Gelenk ausgebildeten Scharnierdrehpunkt 4 mit einem Ausleger 5 verbunden. Die Haubenbefestigungsschiene 3 weist dazu eine senkrecht zur ihrer Hauptausdehnung stehende Lagerbacke 6 auf.

Der Ausleger 5 ist ein flacher Hebel, der an einem Ende abgewinkelt ist, wobei die Lagerbacke 6 der Haubenbefestigungsschiene 3 an diesem abgewinkelten Abschnitt 7 anliegt. Die Lagerbacke 6 und der Abschnitt 7 sind von einem Bolzen 8 durchdrungen, der den Scharnierdrehpunkt 4 bildet.

Der Ausleger 5 ist drehbar an einer Karosseriebefestigungsschiene 9 befestigt, die mit einer Strebe der Karosserie verbunden ist. Die Karosseriebefestigungsschiene 9 weist dazu an ihrem anderen Ende ebenfalls eine Lagerbacke 10 auf, die an einer korrespondierenden Lagerbacke 11 des Auslegers anliegt. Auch diese beiden Backen 10, 11 sind von einem Bolzen 12 durchdrungen, der damit einen als Gelenk ausgebildeten Auslegerdrehpunkt 13 für den Ausleger 5 bildet. Des weiteren sind diese beiden zuletzt erwähnten Lagerbacken 10, 11 im Abstand zum Bolzen 12 des Auslegerdrehpunktes 13 von einem Scherbolzen 14 durchdrungen, der bei einer auf den Ausleger 5 von oben wirkenden Kraft eine bestimmten Größe abschert und so eine Drehung des Auslegers 5 im Auslegerdrehpunkt 13 ermöglicht. Die Ursprungssituation mit einem intakten Scherbolzen 14 ist in der Fig. 1 gezeigt.

Diese Situation mit einem abgescherten Scherbolzen 14 ist in Fig. 2 dargestellt: Der Ausleger 5 hat sich um den Auslegerdrehpunkt 13 gedreht, so dass sich der Scharnierdrehpunkt 4 unterhalb der Ursprungsposition und näher der Fahrzeugmitte befindet. Außerdem ist die Achse des Scharnierdrehpunktes 4 und damit die Haubenbefestigungsschiene 3 gekippt.

In Fig. 3 lässt sich der damit erzielte Erfolg gut erkennen: Erkennbar ist die Karosseriebefestigungsschiene 9 von vorne und die mit ihr verbundene Lagerbacke 10, an der der Ausleger 5 drehbar gelagert ist. Die Lagerbacke 10 befinden sich unterhalb eines Kotflügels 15. Nach innen, in der Darstellung nach links, erstreckt sich der Ausleger 5, dessen abgewinkeltes Ende in etwa senkrecht steht. An der sich nach vorn erstreckenden Haubenbefestigungsschiene 3 ist die Fronthaube 2 befestigt, die in etwa bündig in den Kotflügel 15 übergeht.

Der aufschlagende Kopf, hier dargestellt durch eine Kugel 17, trifft den Übergangsbereich von Kotflügel 15 und Fronthaube 2, wobei der Schwerpunkt über der Fronthaube 2 liegt. Durch die Wucht des Aufpralls wird diese nach unten gedrückt und der Ausleger 5 belastet. Bei einer bestimmten Kraft wird der Scherbolzen 14 abgeschert, so dass der Ausleger 5 nachgibt. Er führt dadurch eine Drehbewegung um den Auslegerdrehpunkt 13 aus, wodurch die Haubenbefestigungsschiene 3 nach innen vom Kotflügel 15 weg verlagert wird und sich schräg stellt. Dabei wird der Kopf (Kugel 17) mitgenommen und vom Kotflügel 15 entfernt, was durch die nun strichpunktiert dargestellte Lage der Kugel 17 angedeutet sein soll.

In Fig. 4 ist eine weitere Ausführung der Erfindung dargestellt. Es wird ein Scharnier 1 an einem Ausleger 5 dargestellt, das für eine übergreifende Fronthaube geeignet ist. Bei einer solchen Ausführung soll die Fronthaube bei einem Kopfaufprall im hinteren Bereich von der A-Säule 18 nach vorne wegbewegt werden. Dazu ist im Gegensatz zu der bisher beschriebenen Ausführung die Achse des Auslegerdrehpunktes 13 in Fahrzeugquerrichtung ausgerichtet. Dies hat zur Folge, dass der Scharnierdrehpunkt 4 nach Abscheren des Scherbolzens 14 gemäß dem Pfeil 19 auf einem Kreisbogen nach vorne zur Front des Fahrzeuges und nach unten wandert und dabei den Kopf, auch hier durch eine Kugel 17 dargestellt, von der A-Säule 18 weggezogen wird. Ansonsten entspricht die Ausführung der Fig. 4 den in den Figuren 1 bis 3 dargestellten, so dass auch dieselben Bezugszeichen verwendet sind.

### Bezugszeichenliste

- 1: Scharnier
- 2: Fronthaube
- 3: Haubenbefestigungsschiene
- 4: Scharnierdrehpunkt
- 5: Ausleger
- 6: Lagerbacke
- 7: Abschnitt
- 8: Bolzen
- 9: Karosseriebefestigungsschiene
- 10: Lagerbacke
- 11: Lagerbacke
- 12: Bolzen
- 13: Auslegerdrehpunkt
- 14: Scherbolzen
- 15: Kotflügel
- 17: Kugel
- 18: A-Säule
- 19: Pfeil

## Patentansprüche

1. Karosserie für ein Fahrzeug mit einer nachgiebig gelagerten Fronthaube (2), die den Bereich zwischen zwei Kotflügeln der Karosserie überspannt und zu beiden Seiten mit jeweils einem Scharnier (1) mit der Karosserie verbunden ist, so dass die Fronthaube um eine von den Scharnieren (1) definierte Schwenkachse aufklappbar ist, wobei jedes Scharnier (1) einen Scharnierdrehpunkt (4) am freien Ende eines mit der Karosserie verbundenen Auslegers (5) aufweist, der bei einer stoßartigen, Belastung seine Lage derart ändert, indem es sich um einen Auslegerdrehpunkt dreht, so dass der Scharnierdrehpunkt (4) einen nach unten gerichteten Versatz gegenüber der Karosserie erfährt, **dadurch gekennzeichnet, dass** bei der stoßartigen Belastung die mit dem Ausleger (5) im Scharnierdrehpunkt (4) verbundene Haubenbefestigungsschiene (3) nach innen vom jeweils benachbarten Kotflügel (15) weg verlagert wird oder der Scharnierdrehpunkt (4) nach vorne zur Front des Fahrzeuges wandert, so dass jedenfalls der Versatz zusätzlich eine horizontale Komponente von einem Karosserieabschnitt weg aufweist, in den die Fronthaube (2) nahe dem Scharnier (1) bündig übergeht.

2. Karosserie nach Anspruch 1, **dadurch gekennzeichnet, dass** der Versatz eine nach unten gerichtete vertikale Komponente aufweist.

3. Karosserie nach Anspruch 1 oder 2, **dadurch gekennzeichnet, dass** die Achse des Scharnierdrehpunktes (4) auf Grund des Versatzes eine Kippung in einer Ebene senkrecht zu Kante des benachbarten Karosserieabschnittes erfährt.

4. Karosserie nach einem der Ansprüche 1 bis 3, **dadurch gekennzeichnet, dass** der Versatz erst oberhalb einer bestimmten Belastung eintritt.

5. Karosserie nach einem der Ansprüche 1 bis 4, **dadurch gekennzeichnet, dass** der Ausleger (5) unterhalb des Scharnierdrehpunktes (4) in einen Auslegerdrehpunkt (13) drehbar an der Karosserie gelagert und die Achse des Auslegerdrehpunktes (13) in etwa parallel zur Kante des Karosserieabschnittes ausgerichtet ist.

6. Karosserie nach einem der vorhergehenden Ansprüche, **dadurch gekennzeichnet, dass** der Ausleger (5) mittels einer bei der bestimmten Belastung brechenden oder nachgebenden Verbindung an der Karosserie gehalten ist.

7. Karosserie nach Anspruch 6, **dadurch gekennzeichnet, dass** der Ausleger (5) und die Karosserie je eine Backe (10, 11) aufweist, die flächig aneinander liegen und von einem Scherbolzen (14) durchdrungen sind.

8. Karosserie nach einem der vorhergehenden Ansprüche, **dadurch gekennzeichnet, dass** der besagte Karosserieabschnitt vom Kotflügel (15) gebildet ist und der Versatz eine Komponente quer zur Längsrichtung des Fahrzeuges aufweist, wobei die Drehachse des Auslegerdrehpunktes (13) im Wesentlichen parallel zum Kotflügel (15) verläuft, und dass der Auslegerdrehpunkt (13) an einem Lagerbock unterhalb des Kotflügels (15) angeordnet ist.

9. Karosserie nach einem der Ansprüche 1 bis 7, **dadurch gekennzeichnet, dass** die hintere Kante der Fronthaube (2) bündig in Karosserieabschnitte, die den Wasserkasten oder Teile der A-Säule (18) bilden, übergeht und dass sich die Achse des Auslegerdrehpunktes (13) quer zur Fahrzeuglängsrichtung erstreckt, so dass der Ausleger (5) nach Überschreiten der Grenzbelastung nach vorne kippt.

## Claims

1. A bodywork for a vehicle comprising a resiliently mounted front bonnet (2) which spans the region between two wings of the bodywork and is connected to the bodywork at each side by a respective hinge (1) so that the front bonnet is adapted to be opened about a pivotal axis defined by the hinges (1), wherein each hinge (1) comprises a pivotal point of the hinge (4) which is located at the free end of an extension arm (5) connected to the bodywork and, upon the occurrence of an impulsive load, changes its position in such a manner that it rotates about a pivotal point of the extension arm so that the pivotal point of the hinge (4) experiences a downwardly directed displacement with respect to the bodywork, **characterized in that**, in the event of the impulsive load, the bonnet mounting rail (3) that is connected to the extension arm (5) at the pivotal point of the hinge (4) is shifted inwardly away from the respective neighbouring wing (15) or the pivotal point of the hinge (4) moves forward towards the front of the vehicle so that in each case the displacement additionally comprises a horizontal component away from a section of the bodywork with which the front bonnet (2) merges in flush manner near the hinge (1).

2. A bodywork in accordance with Claim 1, **characterized in that** the displacement has a downwardly directed vertical component.

3. A bodywork in accordance with Claim 1 or 2, **characterized in that** the axis of the pivotal point of the hinge (4) is tilted in a plane perpendicular to the edge of the neighbouring section of the bodywork due to the displacement.

4. A bodywork in accordance with any of the Claims 1 to 3, **characterized in that** the displacement occurs only above a predetermined load.

5. A bodywork in accordance with any of the Claims 1 to 4, **characterized in that** the extension arm (5) is rotatably mounted on the bodywork at a pivotal point of the extension arm (13) below the pivotal point of the hinge (4) and the axis of the pivotal point of the extension arm (13) is aligned approximately parallel to the edge of the section of the bodywork.

6. A bodywork in accordance with any of the preceding Claims, **characterized in that** the extension arm (5) is held on the bodywork by means of a connection which breaks or gives way under the pretermined load.

7. A bodywork in accordance with Claim 6, **characterized in that** the extension arm (5) and the bodywork each comprises a cheek (10, 11) which lie flatly upon one another and are penetrated by a shear pin (14).

8. A bodywork in accordance with any of the preceding Claims, **characterized in that** the said section of the bodywork is formed by the wing (15) and the displacement has a component transverse to the longitudinal direction of the vehicle, wherein the axis of rotation of the pivotal point of the extension arm (13) runs essentially parallel to the wing (15), and **in that** the pivotal point of the extension arm (13) is arranged on a bearing block underneath the wing (15).

9. A bodywork in accordance with any of the Claims 1 to 7, **characterized in that** the rear edge of the front bonnet (2) merges in flush manner into sections of the bodywork which form the water tank or parts of the A-pillar (18) and **in that** the axis of the pivotal point of the extension arm (13) extends transversely relative to the longitudinal direction of the vehicle so that the extension arm (5) tilts forwardly after the critical load has been exceeded.

## Revendications

1. Carrosserie pour un véhicule avec un capot avant (2) monté de manière flexible, qui couvre la zone entre deux ailes de la carrosserie et qui est assemblé à la carrosserie sur chacun des deux côtés par une charnière (1), de telle sorte que le capot avant peut s'ouvrir en basculant autour d'un axe de pivotement défini par les charnières (1), chaque charnière (1) comportant un point de rotation (4) de charnière au niveau de l'extrémité libre d'un bras (5) relié à la carrosserie, lequel, en cas de sollicitation violente, modifie sa position en tournant autour d'un point de rotation du bras, de telle sorte que le point de rotation (4) de charnière subisse un décalage orienté vers le bas par rapport à la carrosserie, **caractérisée en ce que**, lors d'une sollicitation violente, le rail de fixation (3) du capot, qui est relié au bras (5) au point de rotation (4) de charnière, est décalé vers l'intérieur en s'écartant de l'aile (15) respectivement adjacente ou bien le point de rotation (4) de charnière se déplace vers l'avant vers la partie avant du véhicule, de telle sorte que, dans tous les cas, le décalage comporte en plus une composante horizontale qui s'écarte d'une partie de la carrosserie, de sorte que le capot avant (2) se prolonge en affleurant à proximité de la charnière (1).

2. Carrosserie selon la revendication 1, **caractérisée en ce que** le décalage comporte une composante verticale qui est dirigée vers le bas.

3. Carrosserie selon la revendication 1 ou 2, **caractérisée en ce que** l'axe du point de rotation (4) de charnière subit, en raison du décalage, un basculement dans un plan perpendiculaire au bord de la partie de carrosserie voisine.

4. Carrosserie selon l'une quelconque des revendications 1 à 3, **caractérisée en ce que** le décalage se produit uniquement au-delà d'une sollicitation déterminée.

5. Carrosserie selon l'une quelconque des revendications 1 à 4, **caractérisée en ce que** le bras (5) est monté rotatif sur la carrosserie en un point de rotation (13) du bras situé en dessous du point de rotation (4) de charnière et **en ce que** l'axe du point de rotation (13) du bras est orienté sensiblement parallèle au bord de la partie de carrosserie.

6. Carrosserie selon l'une quelconque des revendications précédentes, **caractérisée en ce que** le bras (5) est maintenu sur la carrosserie au moyen d'un assemblage qui se rompt ou se déforme sous la sollicitation déterminée.

7. Carrosserie selon la revendication 6, **caractérisée en ce que** le bras (5) et la carrosserie comportent chacun une joue (10, 11), lesquelles sont en appui plan l'une contre l'autre et à travers lesquelles passe un boulon de cisaillement (14).

8. Carrosserie selon l'une quelconque des revendications précédentes, **caractérisée en ce que** ladite partie de carrosserie est formée par l'aile (15) et **en ce que** le décalage comporte une composante transversale à la direction longitudinale du véhicule, l'axe de rotation du point de rotation (13) du bras étant sensiblement parallèle à l'aile (15), et **en ce que** le point de rotation (13) du bras est agencé sur un support de palier en dessous de l'aile (15).

9. Carrosserie selon l'une quelconque des revendications 1 à 7, **caractérisée en ce que** le bord arrière du capot avant (2) se prolonge en affleurant les parties de carrosserie, qui forment le réservoir d'eau ou des parties du montant avant (18), et **en ce que** l'axe du point de rotation (13) du bras est perpendiculaire à la direction longitudinale du véhicule, de telle sorte que le bras (5) bascule vers l'avant après le franchissement d'une sollicitation limite.
